# EUROPÄISCHE PATENTANMELDUNG

(11) **EP 0 943 647 A1**
(43) Veröffentlichungstag der Anmeldung: **22.09.1999**
(21) Anmeldenummer: 98124180.5
(22) Anmeldetag: 21.12.1998
(51) Int. Cl.: C08K 3/22, C01F 7/44, C09C 1/40

(54) **Flammwidrige Kunststoffmischung und Verfahren zur Herstellung eines Füllstoffs**

(30) Priorität: 20.03.1998 DE 19812279
(71) Anmelder: Nabaltec - Nabwerk Aluminiumhydroxid Technologie GmbH, 92421 Schwandorf (DE)
(72) Erfinder: Prescher, Klaus-Dieter, Dr., 92421 Schwandorf (DE); Fischer, Josef, 92442 Wackersdorf (DE); Trettenbach, Johann, Dr., 93142 Maxhütte-Haidhof (DE); Ross, Stefan, Dr., 93059 Regensburg (DE); Brandl, Josef, 93158 Teublitz (DE)
(74) Vertreter: Müller-Wolff, Thomas, Dipl.-Ing.

(57) **Zusammenfassung**

Eine flammwidrige Kunststoffmischung enthält 55 - 75 % Böhmit, der eine orthorhombische Kristallstruktur aufweist und der allgemeinen Formel AlOₓ(OH)₃₋₂ₓ mit x-Werten zwischen 0,8 und 0,99 genügt, einen mittleren Korndurchmesser d₅₀ zwischen 0,4 und 0,7 µm, einem d₁₀-Wert zwischen 0,7 und 1,2 µm sowie einem d₉₀-Wert zwischen 0,2 und 0,4 µm hat. Der Füllstoff wird aus einem Fällungsprozeß nach dem Bayer-Verfahren feinst-kristallisierter Hydrargillit mit einem Korndurchmesser von 0,5 bis 3 µm eingesetzt, der suspendiert und ohne mechanische Bearbeitung direkt in einem Hydrothermalprozeß bei Temperaturen zwischen 220 und 240 °C unter turbulenten Bedingungen in einen Böhmit der allgemeinen Formel AlOₓ(OH)₃₋₂ₓ mit x-Werten zwischen 0,8 und 0,99 überführt wird. Der Phasenumwandlungsdruck beträgt mindestens 24 bar nach einer Verweilzeit von 1 - 15 min bei Temperaturmaximum, wonach auf Umgebungsdruck abgesenkt wird.

## Beschreibung

Die Erfindung betrifft eine flammwidrige Kunststoffmischung, die 55 - 75 % Böhmit enthält sowie ein Verfahren zur Herstellung eines Füllstoffs für die Einarbeitung in eine Kunststoffmischung.

Aus DE 33 08 023 C2 ist es bekannt, Hydrargillit bei 180 - 220°C einer hydrothermalen Behandlung zu unterwerfen. Dabei geht das Hydrargillit in Böhmit über und kann als flammhemmendes Mittel und zur Pigmentierung in Anteilen bis zu 80 % in Kunststoffe eingearbeitet werden.

Weiterhin ist es aus DE 30 04 310 C2 bekannt, Hydrargillit bei 200 - 270°C über 1 - 60 Minuten in Böhmit umzuwandeln und die Suspension durch Entspannen auf Athmosphärendruck abzukühlen. Hierbei wird der Hydrargillit oberflächlich böhmitisiert, so daß der Hauptbestandteil Aluminiumhydroxid immer noch einen gebundenen Wasseranteil enthält, der deutlich größer als 30 % ist. Außerdem zeigt Tabelle 1, daß ca. 70 % des erhaltenen böhmitisierten Hydrargillits eine Teilchengröße kleiner 60 µm aufwies. Daraus läßt sich ein Kautschukfüllstoff für geringe mechanische Banspruchungen herstellen.

Andere flammwidrige Kunststoffmischungen werden beispielsweise für den Einsatz in Kabelanwendungen, im Kabelmantel und der - isolation eingesetzt. Die Anforderungen an die Mischungen im bezug auf physikalische Eigenschaften (mechanische und elektrische Kenndaten) sind extrem hoch. Nur mit sehr feinteiligen mineralischen Flammschutzmitteln (mittlere Korndurchmesser kleiner 2 µm) werden diese hohen Ansprüche derzeit erreicht. Neben der Kornfeinheit spielt auch die Kornform des Füllstoffs eine entscheidende Rolle, um bei den benötigten hohen Füllgraden während der Verarbeitung das Viskositätsniveau auf einem moderaten Level zu halten. Hochwertige handelsübliche Magnesiumhydroxide, die den gestellten Anforderungen am besten genügen, sind relativ teuer, da sie keine Massenprodukte darstellen und es sich bei der Herstellung derselben um aufwendige Produktionsprozesse handelt.

In Kabelanwendungen werden im Brandfall an die Ummantelungen des Leiters hohe Anforderungen gestellt; die flammwidrige Kunststoffmischung soll durch ihre hohe thermische Stabilität als mechanischer Abstandshalter zwischen den Leiterdrähten wirken und auch im zersetzten Zustand die Isolierwirkung weitgehend garantieren. Dies gelingt nur, wenn die bei der jeweiligen Brandtemperatur auftretenden Zersetzungsprodukte eine relativ feste, formstabile Schutzschicht ausbilden.

Es ist aus der Literatur (bspw. P.R. Hornsby, Macromol. Symp. 108 (1996) 203 - 219) bekannt, daß eine der Voraussetzungen, einen mineralischen Füllstoff als Flammschutzmittel in einem bestimmten Kunststoffsystem einsetzen zu können, die relativen Zersetzungstemperaturen von Polymer und Füllstoff darstellen. Dies wird verdeutlicht, wenn man sich die Phasen eines üblichen Brandverlaufs genauer anschaut (s.a. Brandverhalten von Kunststoffen; Hrsg.: Jürgen Troitzsch, Carl Hanser Verlag München, 1981; S. 11). Ein Flammschutzmittel muß seinen Beitrag vor Ausbruch des eigentlichen, nicht mehr kontrollierbaren Brandes leisten, also in der Zeit t zwischen dem Brandbeginn und dem voll entwickelten Brand (gekennzeichnet durch den sog. "flash-over"). Hier können Flammschutzmittel entweder aufgrund ihrer selbstverlöschenden Eigenschaften einen Brandausbruch vollkommen verhindern oder zumindest deutlich verzögern, um ausreichend Zeit zu geben, um Schäden für Menschen und Gebäude zu minimieren. Sollte die Zersetzungstemperatur des Füllstoffs deutlich höher sein als die Entflammungs-/Entzündungstemperatur des Polymeren, so ist der Beitrag des Füllstoffs zum Flammschutz nicht sehr effektiv.

Aufgabe der vorliegenden Erfindung war es, einen für die Einmischung in Kunststoffen, wie bspw. Polypropylen, Polyamid oder dergleichen geeigneten Füllstoff insbesondere für Kabelummantelungen/-isolationen zu entwickeln, der eine Zersetzungstemperatur von über 300 °C aufweist und ein zur Herstellung dieses Füllstoffs geeignetes Verfahren anzubieten, das kostengünstig und für Massenprodukte mit gleichmäßig guten Eigenschaften einsehbar ist.

Diese Aufgabe wird durch die in den Ansprüchen 1, 3 und 4 angegebenen Merkmale gelöst. Es hat sich gezeigt, daß der mit einer sehr engen Kornverteilung hergestellte Füllstoff ein sehr gutes Brand- und Einmischverhalten zeigt. Die Oberflächeneigenschaften des Böhmits werden durch seine orthorhombische Kristallstruktur und dem geringen Na₂O-Gehalt < 0,05 % günstig beeinflußt. Für Anwendungen im Farbspektrum "weiß bis hellbunt" ist ein Weißgrad von > 95 % von Vorteil, der erfindungsgemäß auch bei Massenproduktionen sicher eingehalten wird.

Anhand einfacher Brandtests konnte festgestellt werden, daß unter Verwendung des erfindungsgemäßen Füllstoffs hergestellte Kabelmischungen eine gute isolierende Barriereschicht auch nach Erreichung der Zersetzungstemperatur aufwiesen. Es verblieb eine mineralisierte Schutzschicht, die eine hohe Aschefestigkeit besaß. So können Kurzschlüsse bei Kabelbränden vermieden werden.

Der nach dem erfindungsgemäßen Verfahren hergestellte, pulverförmige Böhmit hat einen Glühverlust von ca. 17 %, der bei Temperaturen über 300 °C noch mindestens 15 % beträgt. Die maximale Zersetzungsgeschwindigkeit wird bei ca. 500 °C erreicht. Dies ist deutlich höher als der Zersetzungsbereich und die Entflammungstemperatur gängiger Thermoplaste (s.a. Brandverhalten von Kunststoffen; Hrsg.: Jürgen Troitzsch, Carl Hanser Verlag München, 1981; S. 19 und 23).

Überraschenderweise ist der nach dem erfindungsgemäßen Verfahren hergestellte Füllstoff trotz seiner hohen Zersetzungstemperatur geeignet, in Anwendungen, besonders im Kabelmantelbereich, als flammhemmender Füllstoff eingesetzt zu werden.

Im folgenden wird die Erfindung anhand mehrerer Ausführungsbeispiele näher erläutert. Es zeigen:
- Fig. 1: Verfahren zur Herstellung des erfindungsgemäßen Füllstoffs in Blockbildschrift;
- Fig. 2: Glühverlust einer erfindungsgemäßen Böhmitprobe in Abhängigkeit von der Temperatur (Heizrate 5°C/min);
- Fig. 3a: BET-Verteilung (DIN 66131/66132) bei einem nach dem erfindungsgemäßen Verfahren hergestellten Böhmit in Abhängigkeit von seiner Herstellungstemperatur (Phasenumwandlungen von Hydrargillit in Böhmit);
- Fig. 3b: Kornparameter (Cilas Lasergranulometer HR 850) bei einem nach dem erfindungsgemäßen Verfahren hergestellten Böhmit in Abhängigkeit von seiner Herstellungstemperatur (Phasenumwandlung von Hydrargillit in Böhmit).

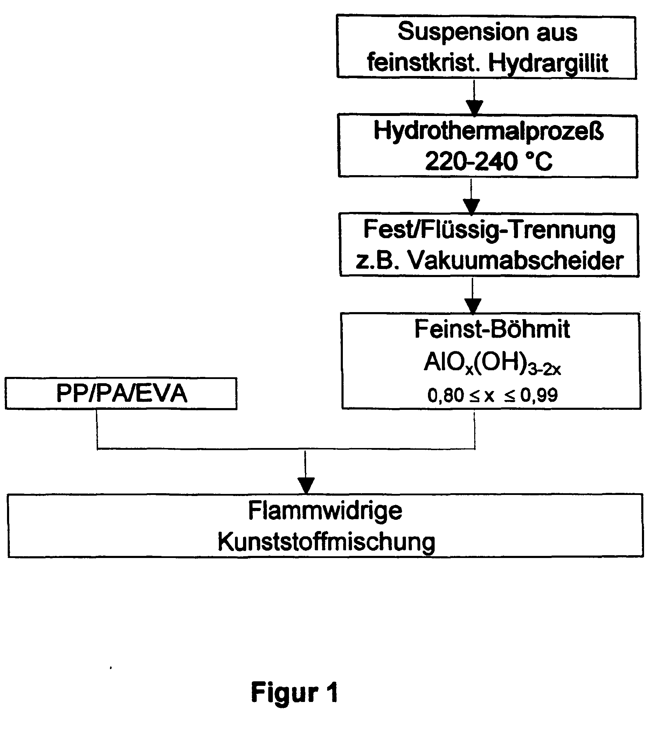

Die Herstellung einer flammwidrigen Kunststoffmischung erfolgt gemäß Blockbildschema nach Figur 1 dadurch, daß eine Suspension aus feinst-kristalliertem Hydrargillit unter bestimmten, engen Parameterngrenzen einem Hydrothermalprozeß unterworfen wird, bei dem nach der Fest-Flüssig-Trennung ein feinstteiliger Böhmit erzeugt wird. Dieser erfindungsgemäße Böhmit wird anschließend mit dem jeweiligen Kunststoff zusammen verarbeitet. Der Böhmit zeichnet sich durch folgende Eigenschaften aus:
- Gutes Pulverhandling trotz hoher Feinheit (geringe Neigung zur Brückenbildung);
- Gute Dispergierbarkeit mit vielzähligen Kunststoffarten ohne zusätzliche vorherige Oberflächenbehandlung;
- Ausgewogene mechanische Eigenschaften des gefüllten Compounds;
- Ausreichende Resistenz gegenüber Säuren und Laugen aufgrund der chemischen Zusammensetzung;
- Günstige Kostenstruktur;
- Verarbeitungstemperaturen bis 280 °C;
- Hohe Extrusionsgeschwindigkeiten fahrbar.

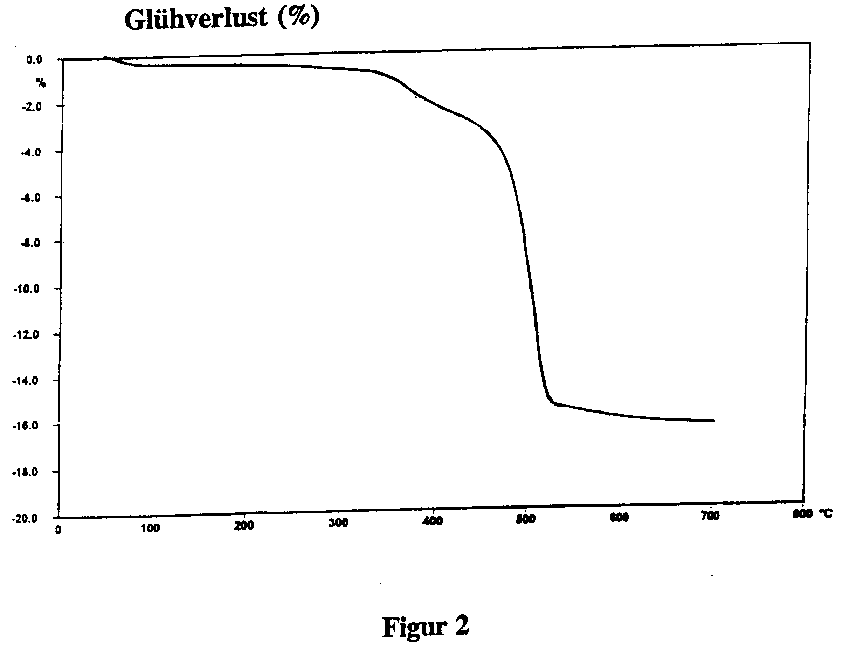

Aus der Darstellung nach Figur 2 ist ersichtlich, daß der Glühverlust des erfindungsgemäßen Böhmit bis 300 °C ca. 1 % beträgt. Anschließend nimmt der Glühverlust stetig ab und erreicht bei ca. 500°C seine maximale Zersetzungsgeschwindigkeit. Im Brandfall ermöglicht die zuerst moderat und recht mild verlaufende Zersetzung den langsamen Aufbau einer mineralischen Schicht, die mit zunehmendem Fortschreiten der Zersetzung an Dicke und Stabilität gewinnt. Diese Eigenschaft ist besonders bei Kabelbränden zur Vermeidung von Kurzschlüssen sehr wichtig.

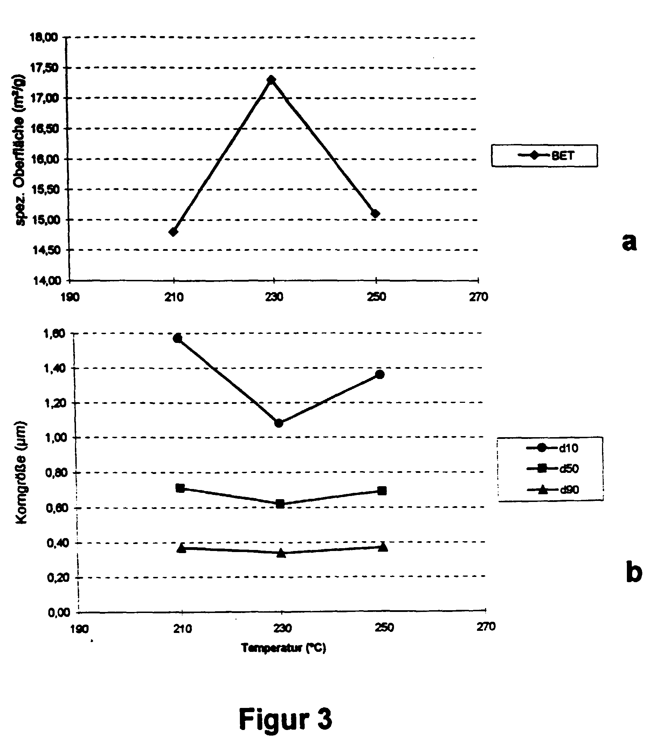

Figur 3a zeigt die BET-Verteilung, die sich bei dem erfindungsgemäß im Hydrothermalprozeß hergestellten Böhmit in Abhängigkeit von der Prozeßtemperatur einstellt. Überraschenderweise wurde festgestellt, daß im Temperaturbereich zwischen 220 und 240°C die BET-Werte einen maximalen Wert durchlaufen.

Wie man anhand Figur 3b erkennen kann, zeichnet sich der nach dem erfindungsgemäßen Verfahren hergestellte Böhmit durch minimale Korngrößenparameter, insbesondere bei einer Herstellungstemperatur von 230 °C und einer Verweilzeit von 1 - 15 min aus. Dies bedeutet, daß ein derart hergestellter Böhmit eine extreme Feinheit bei gleichzeitig sehr enger Kornverteilung aufweist. Die Kornverteilung wurde mittels Lasergranulometrie (CILAS HR 850) bestimmt. Die nachfolgend für den erfindungsgemäßen Böhmit angegebenen charakteristischen Korngrößen d entsprechen den Parametern R (Rückstand) gemäß der DIN 66141:
d₁₀-Wert: 0,7 - 1,2 µm
d₅₀-Wert: 0,4 - 0,7 µm
d₉₀-Wert: 0,2 - 0,4 µm.

Als Konsequenz dieser engen Verteilung besteht der erfindungsgemäße Böhmit folglich aus Partikeln relativ ähnlicher Größe, wodurch die Einarbeitung des Füllstoffs in die Polymermatrix erleichtert und sehr homogene Compounds hergestellt werden können.

Somit genügt dieser Böhmit den eingangs erwähnten hohen Anforderungen hinsichtlich des Einmischens, der mechanischen Festigkeiten und der guten Verarbeitbarkeit. Darüber hinaus besitzt das erfindungsgemäß hergestellte Produkt ein gutes Pulverhandling und erfüllt im Brandfall die hohen Ansprüche in der Kabelindustrie.

Des weiteren korrelieren die minimalen Kornparameter, also der größten Kornfeinheit, mit einer maximalen spezifischen Oberfläche. Bekanntermaßen ist die zur Erzielung der flammwidrigen Wirkung benötigte Zersetzung eines mineralischen Füllstoffs umso rascher, je feiner der Füllstoff ist. Somit ist der erfindungsgemäße Böhmit, der zwischen 220 und 240 °C erzeugt wird, besonders gut als flammhemmender Füllstoff zu gebrauchen.

In der eingangs zitierten Veröffentlichung der Zeitschrift Industrial Minerals ist beschrieben, daß die meisten mineralischen Füllstoffe polare Oberflächen haben, die nur eine geringe Kompatibilität mit Polymerstoffen aufweisen. Darüber hinaus ist die Oberfläche bspw. eines handelsüblichen synthetischen Magnesiumhydroxids deutlich alkalischer (pH-Wert einer wässrigen Suspension beträgt ca. 9) als die des Böhmits (pH-Wert um 7,5), da hier durch den Produktionsprozeß störende Fremdionen weitestgehend abgetrennt werden können. Die in handelsüblichem Magnesiumhydroxid enthaltenen Ionen können bei der Verarbeitung mit anderen Bestandteilen der Formulierung (bspw. Stabilisatoren, Vernetzungsmitteln u.a.) wechselwirken und so deren Aktivität und Wirkungsweise beeinträchtigen. Deshalb wurde bisher häufig eine Vorbehandlung der Füllstoffoberfläche mit bspw. Fettsäuren oder organofunktionellen Silanen durchgeführt. Diese auch unter Kostenaspekten aufwendige Vorbehandlung ist aufgrund der nahezu neutralen Oberfläche bei dem Böhmit nicht notwendig. Somit läßt sich der Böhmit auch in unbehandelter Form sehr gut in Polymermischungen einarbeiten und homogen dispergieren.

Überraschenderweise konnte der erfindungsgemäße Böhmit, der ebenfalls eine polare Oberfläche besitzt, auch ohne vorherige Oberflächenvorbehandlung in Füllgraden bis 75 Gew.-% in polymere Mischungen homogen eingearbeitet werden. Dabei bleiben die mechanischen Werte auf einem vergleichsweisen hohen Niveau, wie man den weiter unten aufgeführten Anwendungsbeispielen entnehmen kann.

### Beispiele

### Beispiel 1

500 g Escorene UL 00119 (Deutsche Exxon Chemical GmbH, Köln) wurden in einem Innenmischer bei einer Temperatur von 175 °C mit 800 g des erfindungsgemäßen Böhmits in Gegenwart von 5 g Aminosilan während 20 min zu einem homogenen Compound verarbeitet.

### Beispiel 2 (Vergleich)

500 g Escorene UL 00119 (Deutsche Exxon Chemical GmbH, Köln) wurden in einem Innenmischer bei einer Temperatur von 175 °C mit 800 g eines natürlichen Magnesiumhydroxids (mittlerer Korndurchmesser 2,3 µm) in Gegenwart von 5 g Aminosilan während 20 min zu einem homogenen Compound verarbeitet.

### Beispiel 3 (Vergleich)

500 g Escorene UL 00119 (Deutsche Exxon Chemical GmbH, Köln) wurden in einem Innenmischer bei einer Temperatur von 175 °C mit 800 g eines synthetischen Magnesiumhydroxids (mittlerer Korndurchmesser 0,75 µm) in Gegenwart von 5 g Aminosilan während 20 min zu einem homogenen Compound verarbeitet.

### Beispiel 4

480 g Escorene UL 00119 (Deutsche Exxon Chemical GmbH, Köln) wurden in einem Innenmischer bei einer Temperatur von 175 °C mit 600 g des erfindungsgemäßen Böhmits in Gegenwart von 3,75 g Aminosilan während 20 min zu einem homogenen Compound verarbeitet.

### Beispiel 5

350 g Escorene UL 00119 (Deutsche Exxon Chemical GmbH, Köln) wurden in einem Innenmischer bei einer Temperatur von 175 °C mit 800 g des erfindungsgemäßen Böhmits in Gegenwart von 5 g Aminosilan während 20 min zu einem homogenen Compound verarbeitet.

Aus den oben beschriebenen Compounds wurden durch 12 minütiges Pressen bei 145 °C Platten hergestellt, aus denen die entsprechenden Probekörper ausgestanzt wurden.

| | |
|---|---|
| - Zugfestigkeit | DIN 53504 |
| - Reißdehnung | DIN 53504 |
| - Schmelzindex MFI (190 °C; 21,6 kg) | ASTM D 1238 |
| - Limiting Oxygen Index LOI | ASTM D 2863-77 |

**Tabelle 1**

| Beispiel Nr. | Füllgrad (Gew.-%) | Zugfestigkeit (N/mm²) | Reißdehnung (%) | Schmelzindex (cm³/10min) | LOI (%O₂) |
|---|---|---|---|---|---|
| 1 | 61,3 | 18,2 | 165 | 0,5 | 34,6 |
| 2 | 61,3 | 14,2 | 83 | 3,0 | 36,8 |
| 3 | 61,3 | 14,6 | 135 | 0,3 | 39,2 |
| 4 | 55,4 | 18,6 | 254 | 1,7 | 28,0 |
| 5 | 69,3 | 16,3 | 98 | 0,1 | 41,4 |

Aus den voranstehenden Ergebnissen ist ersichtlich, daß die mit dem erfindungsgemäßen Böhmit gefüllte Mischung (Beispiel Nr. 1) im Vergleich zu den mit Magnesiumhydroxid gefüllten Mischungen (Beispiele Nr. 2 und 3) deutlich bessere mechanische Eigenschaften besitzt. Im bezug auf den Schmelzindex, der eine Aussage auf die Verarbeitbarkeit während der Mischungsaufbereitung zuläßt, zeigt die Mischung Nr. 2 gefüllt mit dem natürlichen Magnesiumhydroxid recht gute Werte. Dies ist aber verbunden mit relativ niedrigen Dehnungswerten des fertigen Compounds, die den meist hohen Anforderungen an solche Mischungen nicht genügen.

Auch die Flammwidrigkeit der Mischung 1, gekennzeichnet durch den LOI-Wert, ist auf einem vergleichbar hohen Niveau. Selbst bei sehr hohen Füllgraden bis 70 Gew.-% (Beispiel Nr. 5) offeriert die mit Böhmit gefüllte Mischung noch bessere mechanische Festigkeiten bei akzeptablen Dehnungswerten verglichen mit den Mischungen mit nur ca. 61 Gew.-% Füllgrad an Magnesiumhydroxid. Hervorzuheben ist auch der deutlich höhere LOI-Wert der 69 Gew.-%igen enthaltenden Böhmitmischung.

Ganz allgemein gilt, daß die Bestimmungen des LOI-Werts eine einfache und schnelle Labormethode zur Einschätzung der Flammwidrigkeit einer Kunststoffmischung darstellt. Eine Übertragbarkeit der Ergebnisse auf realle Brandprüfungen, bspw. in der Kabelindustrie, ist nur schwer möglich, da hier ganz andere Prüfbedingungen und - kriterien vorgeschrieben sind.

### Beispiel 6

Ein handelsübliches Polypropylen-Copolymerisat wurde mit dem erfindungsgemäßen Böhmit auf einem Dopelschneckenextruder zu einem homogenen Compound mit einem Füllstoffgehalt von 60 Gew.-% verarbeitet.

### Beispiel 7 (Vergleich)

Ein handelsübliches Polypropylen-Copolymerisat wurde mit einem synthetischen Magnesiumhydroxid auf einem Dopelschneckenextruder zu einem homogenen Compound mit einem Füllstoffgehalt von 60 Gew.-% verarbeitet.

### Beispiel 8

Ein handelsübliches Polypropylen-Copolymerisat wurde mit einer Füllstoffmischung des erfindungsgemäßen Böhmits und einem synthetischen Magnesiumhydroxid (50:50 (w/w)) auf einem Doppelschneckenextruder zu einem homogenen Compound mit einem Füllstoffgehalt von insgesamt 60 Gew.-% verarbeitet.

Bei Beispiel 6 bis 8 wurden die Probekörper aus einem Band ausgestanzt, welches durch eine entsprechende Vorrichtung am Extruderkopf hergestellt wurde.

**Tabelle 2**

| Beispiel Nr. | Füllgrad (Gew.-%) | Zugfestigkeit (N/mm²) | Reißdehnung (%) | LOI (%O₂) |
|---|---|---|---|---|
| 6 | 60 | 19,1 | 141 | 27,8 |
| 7 | 60 | 16,5 | 130 | 32,5 |
| 8 | 60 | 17,9 | 139 | 30,9 |

Vergleicht man die beiden PP-Mischungen der Beispiele 6 und 7 miteinander, so stellt man fest, daß die aufgeführten mechanischen Eigenschaften des Compounds gefüllt mit dem erfindungsgemäßen Böhmit die entsprechenden Werte des Mg(OH)₂-Compounds übertreffen. Neben diesem ausgewogenen mechanischen Eigenschaftsprofil kann der LOI-Wert bei Bedarf angehoben werden, indem dem Kunststoffcompound Magnesiumhydroxid beigemischt wird (s. Bsp. 8).

Hier sind individuelle, im Hinblick auf Kundenwünsche angepaßte, Mischungsverhältnisse darstellbar, wobei die mechanischen Eigenschaften des gefüllten Compounds gleichzeitig auf einem hohen Niveau verbleiben.

## Patentansprüche

1. Flammwidrige Kunststoffmischung, die 55 - 75 % Böhmit enthält,
dadurch gekennzeichnet,
daß der Böhmit, der eine orthorhombische Kristallstruktur aufweist und der allgemeinen Formel AlOₓ(OH)₃₋₂ₓ mit x-Werten zwischen 0,8 und 0,99 genügt, einen mittleren Korndurchmesser d₅₀ zwischen 0,4 und 0,7 µm, einem d₁₀-Wert zwischen 0,7 und 1,2 µm sowie einem d₉₀-Wert zwischen 0,2 und 0,4 µm hat.

2. Flammwidrige Kunststoffmischung nach Anspruch 1,
dadurch gekennzeichnet,
daß der Böhmit eine Na₂O-Gesamtkonzentration von kleiner 0,05 % bezogen auf Aluminiumoxid hat.

3. Flammwidrige Kunststoffmischung nach einem der vorhergehenden Ansprüche,
dadurch gekennzeichnet,
daß der Böhmit einen Weißgrad von größer 95 % aufweist.

4. Verfahren zur Herstellung eines Füllstoffs für die Einarbeitung in eine Kunststoffmischung, wobei Hydrargillit suspendiert und ohne mechanische Bearbeitung direkt in einem Hydrothermalprozeß bei Temperaturen zwischen 220 und 240 °C unter turbulenten Bedingungen in einen Böhmit der allgemeinen Formel AlOₓ(OH)₃₋₂ₓ mit x-Werten zwischen 0,8 und 0,99 überführt wird und daß der für die Phasenumwandlung erforderliche Druck von mindestens 24 bar nach einer Verweilzeit von 1 - 15 min bei Temperaturmaximum auf den Umgebungsdruck abgesenkt wird,
dadurch gekennzeichnet,
daß als Ausgangsprodukt ein aus einem Fällungsprozeß nach dem Bayer-Verfahren feinst-kristallisierter Hydrargillit mit einem Korndurchmesser von 0,5 bis 3 µm eingesetzt wird.

5. Verfahren nach einem der vorhergehenden Ansprüche,
dadurch gekennzeichnet,
daß die Verweilzeit 9 - 11 min beträgt.

6. Verfahren nach einem der vorhergehenden Ansprüche,
dadurch gekennzeichnet,
daß im Anschluß an den Hydrothermalprozeß die Suspension in eine Flüssig-Fest-Trennstufe eingeführt wird.

7. Verfahren nach einem der vorhergehenden Ansprüche,
dadurch gekennzeichnet,
daß der erhaltene Feststoff einem Trocknungsverfahren unterworfen wird.
